# EUROPÄISCHE PATENTSCHRIFT

(11) **EP 2 503 753 B1**
(45) Veröffentlichungstag und Bekanntmachung des Hinweises auf die Patenterteilung: **12.03.2014**
(21) Anmeldenummer: 11159008.9
(22) Anmeldetag: 21.03.2011
(51) Int. Cl.: H04L 29/06, H04M 1/725, H04M 1/65

(54) **Kommunikationsprotokoll zum Austauschen von Steuerdaten zwischen Kommunikationsgeräten mittels Datenverwaltungshandlungen und einer Datenverwaltungsstruktur**
Communication protocol for exchanging management data between communication devices by means of data management transactions and a data management structure
Protocole de communication pour l'échange de données de commande entre des appareils de communication à l'aide d'actions de gestion de données et d'une structure de gestion de données

(43) Veröffentlichungstag der Anmeldung: 26.09.2012
(73) Patentinhaber: Gigaset Communications GmbH, 81379 München (DE)
(72) Erfinder: Beckers, Michael, 46499, Hamminkeln (DE)
(74) Vertreter: Michalski Hüttermann & Partner Patentanwälte

(56) Entgegenhaltungen:
- EP-A2- 2 053 900
- US-A1- 2003 172 046
- US-A1- 2004 030 422
- US-A1- 2007 019 634
- US-A1- 2009 300 199

## Beschreibung

Die Erfindung betrifft ein Verfahren zum Definieren eines Kommunikationsprotokolls zum Austauschen von Steuerdaten zwischen Kommunikationsgeräten, ein Kommunikationsprotokoll zum Austauschen von Steuerdaten zwischen Kommunikationsgeräten, ein Verfahren zum Austauschen von Steuerdaten zwischen einem Kommunikationsgerät und einem weiteren Kommunikationsgerät unter Verwendung eines Kommunikationsprotokolls und ein Kommunikationsgerät zum Austauschen von Steuerdaten mit einem weiterem Kommunikationsgerät unter Verwendung eines Kommunikationsprotokolls.

Kommunikationsprotokolle werden verwendet, wenn Daten zwischen Kommunikationsgeräten ausgetauscht werden sollen. Üblicherweise existieren Kommunikationsprotokollabschnitte eines Kommunikationsprotokolls oder Kommunikationsprotokolle, deren Definition an jeweilige Anwendungszwecke des Kommunikationsprotokollabschnitts beziehungsweise des Kommunikationsprotokolls angepasst ist. Insbesondere existieren Kommunikationsprotokollabschnitte oder Kommunikationsprotokolle zum Verwalten von Daten, die zwischen Kommunikationsgeräten ausgetauscht werden, und zum Austauschen von Steuerdaten zwischen Kommunikationsgeräten, um Funktionalitäten der Kommunikationsgeräte zu steuern.

Ein solches Datenverwaltungsprotokoll spezifiziert Datenverwaltungshandlungen, wie beispielsweise Lesen von Daten, Schreiben von Daten, Einfügen von Daten in bestehende Daten, Ändern von Daten, Allokieren oder Freigeben von Daten in einem Datenspeicher oder auch Senden einer Notifikation über eine (erfolgte oder noch zu erfolgende) Änderung von Daten, und eine Datenverwaltungsstruktur, die die Gliederung der Daten bei deren Übertragung zwischen Kommunikationsgeräten bestimmt.

Ein solcher Datenverwaltungsprotokollabschnitt ist beispielsweise aus ETSI TS 102 527-3, Version 1.2.1, bekannt, der für ein DECT/CAT-iq-Telefonsystem, das ein Mobilteil und eine Basisstation aufweist, einen Zugriff auf Daten, beispielsweise auf eine Rufliste in der Basisstation, durch das Mobilteil, beschreibt.

Ein oben beschriebenes Steuerprotokoll weist Steuerhandlungen, wie beispielsweise ein Ansteuern einer speziellen Funktionalität des Kommunikationsgeräts, ein Abfragen eines Zustands des Kommunikationsgeräts, ein Allokieren oder Freigeben einer Instanz des Kommunikationsgeräts, ein Erzeugen einer Kommunikationsgerätinstanz und ein Senden oder Empfangen einer Notifikation über eine Zustandsänderung eines Kommunikationsgeräts auf. Ein Steuerprotokoll(abschnitt) kann keine eigene Struktur für die Steuerdaten spezifizieren, die den Steuerhandlungen zugordnet sind.

Ein solcher Steuerprotokollabschnitt ist beispielsweise aus ETSI TS 102 527-3, Version 1.2.1, bekannt und betrifft das Verwalten von parallelen Anrufen in dem DECT/CAT-iq-Telefonsystem.

Die beschriebene Untergliederung des Kommunikationsprotokolls in unterschiedliche, anwendungsbedingte Protokollabschnitte beziehungsweise Protokolle kann mit erheblichem Aufwand verbunden sein, da für jedes der Kommunikationsprotokollabschnitte beziehungsweise Protokolle entsprechende Datenbefehle und/oder Datenstrukturen spezifiziert sein müssen.

US 2004/0030422 A1 betrifft eine Feldvorrichtung für Automatisationssysteme, mit einer Einheit für eine interne Datenorganisation, Mittel zum Aufnehmen von Prozessparametern und/oder Mittel zum Ausgeben von Regulationsparametern, Mittel zum Verarbeiten von Signalen in Übereinstimmung mit den aufgenommenen Regulationsparametern oder den auszugebenen Regulationsparametern und zumindest einer Kommunikationsschnittstelle. Die Mittel und die Kommunikationsschnittstelle kommunizieren daher mit einer Einheit für die interne Datenorganisation, um zwischeneinander Daten auszutauschen. Eine Transaktionsmanagereinheit, die bereitgestellt ist, um Blockierungen, Transaktionen und/oder Benutzer zu steuern, wird verwendet, um den Zugriff auf die Daten der Einheit für interne Datenorganisation zwischen den Mitteln, der zumindest einen Kommunikationsschnittstelle und der Einheit für interne Datenkommunikation über die Mittel und über die zumindest eine Kommunikationsschnittstelle zu steuern.

US 2007/0019634 A1 betrifft ein System von Weiterleiten von Paket-basierten Medien in einem Netzwerk. Das System weist zumindest einen Weiterleiter, der dazu eingerichtet ist, zumindest ein Paket von Medien aus zumindest einer Medienquelle, die für den Weiterleiter zugänglich ist, zu extrahieren und das extrahierte Paket von Medien an zumindest eine Empfängervorrichtung weiterzuleiten, und zumindest einen Weiterleitmanager auf, der mit dem Weiterleiter unter Verwendung eines vordefinierten Protokolls kommuniziert, wobei das Kommunizieren Empfangen von Medienzugänglichkeitsinformation, die den Weiterleiter und die zumindest eine Medienquelle betrifft, die für den Weiterleiter zugänglich ist, und Empfangen einer Anfrage aufweist, die eine Medienquelle identifiziert, und der dazu eingerichtet ist, zumindest einen der Weiterleiter aufzulisten, wobei die aufgelisteten Weiterleiter zum Weiterleiten des zumindest einen Pakets von Medien aus der identifizierten Medienquelle gemäß der Medienzugänglichkeitsinformation verwendbar sind.

US 2009/0300199 A1 betrifft ein Verfahren zum Kommunizieren mit entfernten Vorrichtungen, wobei das Verfahren Senden einer Anfrage durch eine Applikationsprogramm-Schnittestelle hindurch, Formattieren der Anfrage und Leiten der Anfrage an eine erste Verbindung, die einem ersten Protokoll zugeordnet ist, umfasst. Das Verfahren umfasst ferner Abbilden der Anfrage in einen ersten Befehl, wobei der erste Befehl mit dem ersten Protokoll übereinstimmt, und Senden des ersten Befehls an die entfernte Vorrichtung.

Die US 2003/0172046 betrifft ein Verfahren und System zur Verwaltung von Geräten über eine Datenbank Anwendungsprogrammierschnittstelle. Das System empfängt eine Anforderung für eine Datenbank-Operation, und ordnet die Anforderung wenigstens einem Befehl für einen Nicht-Datenbank-Betrieb zu. Das System kann des mindestens einen Befehl ausführen, indem es einen System-Aufruf über eine Geräte-API durchführt, oder indem ein Remote Procedure Call zu einem Gerät durchgeführt wird.

Es ist daher eine Aufgabe der vorliegenden Erfindung, ein besonders einfaches Kommunikationsprotokoll, insbesondere ein besonderes einfaches Steuern von Kommunikationsgeräten, zu ermöglichen.

Diese Aufgabe wird durch ein Kommunikationsprotokoll zum Austauschen von Steuerdaten zwischen Kommunikationsgeräten, ein Verfahren zum Austauschen von Steuerdaten zwischen einem Kommunikationsgerät und einem weiteren Kommunikationsgerät unter Verwendung eines Kommunikationsprotokolls und ein Kommunikationsgerät zum Austauschen von Steuerdaten mit einem weiteren Kommunikationsgerät unter Verwendung eines Kommunikationsprotokolls gemäß den unabhängigen Ansprüchen gelöst.

Es ist ein Verfahren zum Definieren eines Kommunikationsprotokolls zum Austauchen von Steuerdaten zwischen Kommunikationsgeräten bereitgestellt, wobei das Verfahren Abbilden von Steuerhandlungen des Kommunikationsprotokolls auf Datenverwaltungshandlung des Kommunikationsprotokolls und Verwenden einer Datenverwaltungsstruktur des Kommunikationsprotokolls für das Austauschen der Steuerdaten zwischen den Kommunikationsgeräten aufweist.

Gemäß einem weiteren exemplarischen Aspekt der Erfindung wird ein Kommunikationsprotokoll zum Austauchen von Steuerdaten zwischen Kommunikationsgeräten nach einem "Digi-tal Enhanced Cordless Telecommunications"(DECT)-Standard bereitgestellt, wobei das Kommunikationsprotokoll eine Anweisung zum Abbilden von Steuerhandlungen eines Kommunikationsprotokolls auf Datenverwaltungshandlungen des Kommunikationsprotokolls und eine Anweisung zum Verwenden einer Datenverwaltungsstruktur des Kommunikationsprotokolls für das Austauschen der Steuerdaten zwischen den Kommunikationsgeräten aufweist.

Gemäß einem weiteren exemplarischen Aspekt der Erfindung wird ein Verfahren zum Austauchen von Steuerdaten zwischen einem Kommunikationsgerät und einem weiteren Kommunikationsgerät unter Verwendung eines Kommunikationsprotokolls bereitgestellt, wobei das Verfahren das Abbilden einer (oder mehrerer) Steuerhandlung(en) auf eine (oder mehrere) Datenverwaltungshandlung(en) des Kommunikationsprotokolls, das Verwenden einer Datenverwaltungsstruktur des Kommunikationsprotokolls für das Austauschen der Steuerdaten und das Austauschen der Steuerdaten zwischen dem Kommunikationsgerät und dem weiteren Kommunikationsgerät aufweist, wobei das Kommunikationsgerät und/oder das weitere Kommunikationsgerät nach einem "Digital Enhanced Cordless Telecommunications"(DECT)-Standard ausgebildet sind.

Gemäß einem weiteren exemplarischen Aspekt der Erfindung wird ein Kommunikationsgerät zum Austauschen von Steuerdaten mit einem weiteren Kommunikationsgerät unter Verwendung eines Kommunikationsprotokolls bereitgestellt, wobei das Kommunikationsgerät eine Einheit zum Abbilden einer Steuerhandlung auf eine Datenverwaltungshandlung des Kommunikationsprotokolls, eine Einheit zum Verwenden einer Datenverwaltungsstruktur des Kommunikationsprotokolls für das Austauschen der Steuerdaten und eine Einheit zum Austauschen der Steuerdaten mit dem weiteren Kommunikationsgerät aufweist.

Im Zusammenhang mit der vorliegenden Erfindung kann der Begriff "Daten" oder Datensatz insbesondere einen (expliziten) Befehl oder eine (explizite) Anweisung zum Ausführen von Protokollhandlungen oder Protokollvorgängen oder Protokollaktionen und/oder Information bezeichnen, die solche Protokollhandlungen betreffen und/oder einen impliziten Befehl aufweisen kann. Insbesondere kann die Information eine Identifikation (eines Feldes) einer Liste einer listenbasierten Datenverwaltungsstruktur in einem Kommunikationsgerät betreffen. Beispielsweise können Daten einen Datenbefehl "Spiele Nachricht ab"-Befehl und zusätzlich einen Datentext "Herr Maier hat angerufen" oder Notifikationsanmeldeinformation "Melde Kommunikationsgerät bei einem weiteren Kommunikationsgerät für eine Notifikation über einen Gerätezustand des weiteren Kommunikationsgeräts an" aufweisen.

Der Begriff "Abbilden von Steuerhandlungen auf Datenverwaltungshandlungen" kann insbesondere ein "Mappen" oder Zuordnen und/oder ein Umwandeln von entsprechenden Befehlen und/oder Information über die Steuerhandlung in Datenverwaltungsbefehle und/oder Daten, die den Datenverwaltungshandlungen zugeordnet sein können, bezeichnen, um die Steuerdaten mittels Datenverwaltungsmechanismen übertragen zu können.

Der Begriff "Datenverwaltungshandlung" kann insbesondere eine Datenzugriffshandlung zum Zugreifen auf Daten in einem Kommunikationsgerät bezeichnen.

Gemäß den exemplarischen Aspekten der Erfindung kann ein vorhandener Datenverwaltungsprotokollabschnitt oder ein vorhandenes Datenverwaltungsprotokoll verwendet werden, um die Steuerdaten zwischen Kommunikationsgeräten auszutauschen. Die Steuerhandlung, die den Steuerdaten zugeordnet sein kann, kann entweder das Austauschen der Steuerdaten selbst darstellen und/oder in dem die Steuerdaten sendenden oder empfangenen Kommunikationsgerät initiiert werden. Das Austauschen der Steuerdaten kann auf eine bereits bestehende Datenverwaltungsstruktur des Kommunikationsprotokolls gestützt werden, so dass die Steuerdaten in die Datenverwaltungsstruktur des (die Steuerdaten empfangenden und/oder sendenden) Kommunikationsgeräts, die mit der Datenverwaltungsstruktur des Kommunikationsprotokolls kompatibel oder identisch sein kann, für dessen Speicherung und/oder Übermittlung eingebettet werden können, um die angefragte Protokollhandlung zu initiieren. In Falle, dass die Datenverwaltungsstruktur mit der Datenverwaltungsstruktur des Kommunikationsprotokolls kompatibel, aber von jener verschieden sein kann, kann das (die Steuerdaten empfangende und/oder sendende) Kommunikationsgerät dazu eingerichtet sein, die Datenverwaltungsstruktur des Kommunikationsprotokolls zu verstehen und in die eigene Datenverwaltungsstruktur zu übersetzen.

Dadurch können vorhandene Implementierungen eines Datenverwaltungsprotokoll(abschnitt)s verwendet werden, um das Austauschen von Steuerdaten zwischen Kommunikationsgeräten auf besonders einfache Art zu ermöglichen. Es ist anzumerken, dass, obwohl das Verwenden bekannter Spezifikationen eines Datenverwaltungsprotokoll(abschnitt)s für das Austauschen von Steuerdaten zwischen Kommunikationsgeräten eine besonders einfache Technik zum Austauschen von Steuerdaten sein kann, diese Technik erstaunlicherweise bis heute nicht ausgeführt worden ist.

Aufgrund einer Verwendung von Spezifikationen eines Datenverwaltungsprotokoll(abschnitt)s kann ein Kostenaufwand für eine Entwicklung, einen Test und eine Inbetriebnahme des erfindungsgemäßen Kommunikationsprotokolls oder des erfindungsgemäßen Kommunikationsgeräts besonders gering sein.

Da bereits erprobte Implementierungen eines Datenverwaltungsprotokoll(abschnitt)s für das Austauschen der Steuerdaten übernommen werden können, kann eine Funktionsweise des Kommunikationsprotokolls besonders zuverlässig sein.

Da eine bereits implementierte Datenverwaltungsstruktur für das Übersenden der Steuerdaten verwendet werden kann, kann eine Schnittstellendefinition zwischen den (auszutauschenden oder ausgetauschten) Steuerdaten und dem Kommunikationsgerät vereinfacht werden, da auf eine bereits vorhandene (und gegebenenfalls standardisierte) Datenverwaltungsstruktur in dem Kommunikationsgerät und dem Kommunikationsprotokoll zurückgegriffen werden kann, die mit den entsprechenden Funktionalitäten des Kommunikationsgeräts gekoppelt sein kann. Der Begriff "Schnittstelle" kann eine Übergabe von Daten, insbesondere der Steuerdaten, an die entsprechenden Funktionalitäten des Kommunikationsgeräts bezeichnen.

Im Folgenden werden exemplarische Ausfiihrungsformen des Verfahrens zum Definieren eines Kommunikationsprotokolls zum Austauschen von Steuerdaten zwischen Kommunikationsgeräten beschrieben. Diese Ausführungsformen betreffen ebenfalls das Kommunikationsprotokoll, das weitere Verfahren zum Austauschen von Steuerdaten zwischen dem Kommunikationsprotokoll und dem weiteren Kommunikationsgerät unter Verwendung des Kommunikationsprotokolls und das Kommunikationsgerät.

Insbesondere können die Steuerhandlung(en) den Steuerdaten zugeordnet sein.

Insbesondere kann die Anweisung zum Abbilden der Steuerhandlungen auf die Datenverwaltungshandlungen eine Abbildungsvorschrift oder mehrere Abbildungsvorschriften aufweisen. Insbesondere kann die Anweisung zum Verwenden der Datenverwaltungsstruktur eine Implementierungsvorschrift zum Implementieren der Steuerdaten in weitere Daten aufweisen, die nicht Steuerhandlungen betreffen oder Steuerdaten sein können, um die Steuerdaten in die Daten zu integrieren. Beide Maßnahmen können eine spezielle Routine des Kommunikationsprotokolls definieren.

Eine Steuerhandlung kann auf eine Datenverwaltungshandlung abgebildet werden, wodurch eine eindeutige, einfache Zuordnung zwischen einer Steuerhandlung und einer Datenverwaltungshandlung ermöglicht wird, so dass das die Steuerdaten empfangene weitere Kommunikationsgerät die angefragte Kommunikationsprotokollhandlung fehlerfrei und gezielt ausführen kann, da eine Fehleranfälligkeit bei einem Interpretieren der empfangenen Steuerdaten vermieden werden kann.

Das Abbilden der Steuerhandlungen auf die Datenverwaltungshandlungen kann Kommunikationsgerät-abhängig erfolgen. Insbesondere kann jeder Typus von Kommunikationsgerät (beispielsweise eine Basisstation einer Generationsnummer) oder jedes individuelle Kommunikationsgerät die verwendete Abbildungsvorschrift selbst definieren. Insbesondere kann das angesprochene Kommunikationsgerät diese Abbildungsvorschrift zum Interpretieren der empfangenen Steuerdaten kennen, die in die Datenverwaltungsstruktur des Kommunikationsprotokolls eingebettet sein kann. Somit kann eine große Flexibilität des Kommunikationsprotokolls bereitgestellt werden, da, je nach auszutauschenden Steuerdaten, eine andere oder mehrere andere Datenverwaltungshandlungen von der Abbildungsvorschrift gewählt werden können, um die Datenverwaltungshandlung auf die Steuerhandlung abzubilden.

Zusätzlich oder alternativ kann insbesondere die verwendete Abbildungsvorschrift in dem Kommunikationsprotokoll vorgegeben sein.

Die Steuerhandlungen können zumindest eins aus Abfragen eines Zustands eines Kommunikationsgeräts, Allokieren eines Kommunikationsgeräts, Freigeben eines Kommunikationsgeräts, Steuern einer Funktion eines Kommunikationsgeräts (beispielsweise eines Abspielfunktion zum Abspielen von Nachrichtentexten und eine Aufnahmefunktion zum Aufnehmen von Nachrichtentexten), Erzeugen einer Instanz in einem Kommunikationsgerät und Austauschen einer Notifikation über einen Zustand eines Kommunikationsgeräts aufweisen. Insbesondere kann eine Instanz in einem Kommunikationsgerät eine logische Instanz sein und es kann eine Unterteilung einer Funktionalität des Kommunikationsgeräts (beispielsweise eines Anrufbeantworters in verschiedene Anrufbeantworterinstanzen für verschiedene Kommunikationsgeräte) oder eine Unterteilung eines Kommunikationsgeräts in verschiedene Funktionalitäten (beispielsweise in einen Anrufbeantworter, in einen SMS-Speicherfunktion, usw.) ermöglicht werden. Insbesondere kann die Notifikation spontan oder auf Anfrage gesendet werden. Diese Arten von Steuerhandlungen ermöglichen standardmäßig verwendete Protokollhandlungen zum Ansteuern (einer Funktionalität) eines Kommunikationsgeräts.

Insbesondere können die Steuerhandlungen entsprechenden Steuerbefehlen und/oder Steuerinformation zugeordnet sein. Dabei kann es sich um eine Eins-zu-Eins-Zuordnung handeln, und eine Steuerhandlung kann einem Steuerbefehl und/oder einer Steuerinformation zugeordnet sein.

Die Datenverwaltungshandlungen können zumindest eins aus Lesen von Daten, Allokieren von Daten, Freigeben von Daten, Schreiben von Daten, Einfügen (oder Ändern) von Daten, und Austauschen einer Notifikation über eine Änderung von Daten (in einem Kommunikationsgerät) aufweisen. Insbesondere kann die Notifikation spontan oder auf Anfrage gesendet werden. Diese Arten von Datenverwaltungshandlungen können standardmäßig auszuführende Protokollhandlungen bei der Datenverwaltung von Daten in einem oder für ein Kommunikationsgerät darstellen.

Insbesondere können die Datenverwaltungshandlungen entsprechenden Datenverwaltungsbefehlen und/oder Information für die Datenverwaltung zugeordnet sein. Dabei kann es sich um eine Eins-zu-Eins-Zuordnung handeln, und eine Datenverwaltungshandlung kann einem Datenverwaltungsbefehl und/oder einer Information für die Datenverwaltung zugeordnet sein.

Insbesondere kann die Steuerhandlung "Abfragen eines Zustands eines Kommunikationsgeräts" auf die Datenverwaltungshandlung "Lesen von Daten" abgebildet werden. Insbesondere kann die Steuerhandlung "Allokieren bzw. Freigeben eines Kommunikationsgeräts oder einer Kommunikationsgeräteinstanz" auf eine Datenverwaltungshandlung "Allokieren bzw. Freigeben von Daten" abgebildet werden. Insbesondere kann eine Steuerhandlung "Steuern einer Funktion eines Kommunikationsgeräts" auf eine Datenverwaltungshandlung "Schreiben von Daten" abgebildet werden. Insbesondere kann eine Steuerhandlung "Erzeugen einer Instanz in einem Kommunikationsgerät" auf eine Datenverwaltungshandlung "Einfügen von Daten" abgebildet werden. Insbesondere kann eine Steuerhandlung "Austauschen einer Notifikation über einen Zustand eines Kommunikationsgeräts" auf eine Datenverwaltungshandlung "Austauschen einer Notifikation über eine Änderung von Daten in dem Kommunikationsgerät" abgebildet werden.

Insbesondere kann eine "Schreiben von Daten"-Datenverwaltungshandlung, die lesbare Daten des weiteren Kommunikationsgeräts betrifft, nicht ausgeführt werden, sofern diese Daten in dem weiteren Kommunikationsgerät erzeugt werden. Insbesondere kann in einem solchen Fall das weitere Kommunikationsgerät den Empfang der Daten, die der Datenverwaltungshandlung zugeordnet sein können, negativ quittieren (oder rückmelden) oder positiv quittieren und zusätzlich die Datenverwaltungshandlung nicht ausführen.

Insbesondere kann eine "Einfügen von Daten"-Datenverwaltungshandlung, die lesbare Daten des weiteren Kommunikationsgeräts betrifft, nicht ausgeführt werden, sofern diese Daten in dem weiteren Kommunikationsgerät nicht (lesbar) vorhanden sein können und auch nur zum Anstoßen der Datenverwaltungshandlung benötigt werden können. Insbesondere kann in einem solchen Fall das weitere Kommunikationsgerät den Empfang der Daten, die der Datenverwaltungshandlung zugeordnet sein können, mit einem Standardwert oder Default quittieren.

Die Datenverwaltungsstruktur kann zumindest eins aus listenbasiert, Datenbaum-basiert und Binärbaumbasiert sein. Eine listenbasierte Datenverwaltungsstruktur kann besonders einfach sein und in Abhängigkeit der zu übermittelnden Daten, insbesondere der Steuerdaten, vielfältig auf einfache Weise (beispielsweise durch Hinzufügen eines neuen Listenfelds einer Liste) modifiziert werden. Alternativ oder zusätzlich kann die Datenveraltungsstruktur Datenbaum-basiert, insbesondere Binärbaum-basiert, sein. Diese Art von Datenverwaltungsstruktur ist ebenfalls weit verbreitet und kann eine hohe Effizienz bei Verwalten der Daten bei einer Datenübermittlung und/oder beim Verwalten der Daten in dem Kommunikationsgerät aufweisen. Insbesondere kann eine Daten(-binär-)baum-basierte Datenverwaltungsstruktur eine besonderes geringe Speicher- und Prozessierungkapazität der Daten bedingen.

Die Steuerdaten können (insbesondere mittels der Datenverwaltungsstruktur) in auszutauschende Daten integriert werden. Dadurch kann bei bekannter Datenverwaltungsstruktur das die Daten empfangene Kommunikationsgerät die Steuerdaten aus den übertragenen Daten auslesen und die angefragte Steuerhandlung ausführen. Dies kann eine besonders einfache und effiziente Übermittlung der Steuerdaten darstellen.

Insbesondere können die Steuerdaten, insbesondere eine Identifikation (eines Feldes) einer anzusprechenden Liste in dem Kommunikationsgerät, die einer zu erzielenden Steuerhandlung zugeordnet ist, ein Steuerbefehl und/oder eine Steuerinformation (,die verschieden von der Feld- oder Listenidentifikation sein kann,) in Felder eines listenbasierten Datenverwaltungsbefehls und/oder einer listenbasierten Datenverwaltungsinformation integriert werden. Insbesondere kann das die Steuerdaten empfangende Kommunikationsgerät basierend auf der übermittelten Identifikation der angesprochenen Liste des Kommunikationsgeräts erkennen, dass eine Steuerhandlung ausgeführt werden soll, und mittels einer dem Kommunikationsgerät empfangenden Abbildungsvorschrift die beabsichtigte Steuerhandlung identifizieren und ausführen. Alternativ oder zusätzlich kann das die Steuerdaten empfangende Kommunikationsgerät mittels des übermittelten Steuerbefehls und/oder der übermittelten Steuerinformation die gewünschte Steuerhandlung identifizieren und ausführen.

(Ein Teil der oder) die Datenverwaltungsstruktur kann durch das Kommunikationsgerät definiert werden, wobei proprietäre (insbesondere herstellerbedingte) und gegebenenfalls standardisierte Datenverwaltungsstrukturen verwendet werden können. Insbesondere kann das Kommunikationsgerät eine Systemeinstellung des Kommunikationsgeräts, die einzigartig sein kann, mittels einer selbst definierten Liste, die beispielsweise ein einziges Feld aufweisen kann, übermittelt werden. Folglich können Schnittstellen zwischen der Datenverwaltungsstruktur und dem jeweiligen Kommunikationsgerät vereinfacht werden und an die jeweiligen technischen Gegebenheiten eines Kommunikationsgeräts flexibel angepasst werden.

Im Folgenden werden exemplarische Ausführungsformen des Verfahrens zum Austauschen von Steuerdaten zwischen einem Kommunikationsgerät und einem weiteren Kommunikationsgerät unter Verwendung eines Kommunikationsprotokolls beschrieben. Diese Ausführungsformen betreffen auch das Verfahren zum Definieren eines Kommunikationsprotokolls, das Kommunikationsprotokoll und das Kommunikationsgerät.

Das Kommunikationsgerät und/oder das weitere Kommunikationsgerät können als Schnurlostelefon (beispielsweise als Mobilteil), als kabelgebundene Basisstation für das Schnurlostelefon oder als Anrufbeantworter der Basisstation ausgebildet sein, wodurch ein entsprechendes Kommunikationssystem, das das Kommunikationsgerät und das weitere Kommunikationsgerät aufweisen kann, als Telefonanlage ausgebildet sein kann.

Das Kommunikationsgerät und/oder das weitere Kommunikationsgerät können nach einem "Digital Enhanced Cordless Telecommunications" (DECT)-Standard, insbesondere nach einem "Cordless Advanced Technology Internet and Quality" (CAT-iq) ausgebildet sein.

Insbesondere kann eine Information, die über eine Bedienoberfläche in ein Kommunikationsgerät eingegeben werden kann, in die entsprechende Steuerhandlung, die ausgeführt werden soll, und/oder die zugeordneten Steuerdaten umgesetzt werden. Somit kann ein Benutzer des Kommunikationsgeräts die auszuführende Steuerhandlung gezielt initiieren.

Im Folgenden werden exemplarische Ausführungsformen des Kommunikationsgeräts beschrieben. Diese Ausführungsformen betreffen auch das Verfahren zum Austauschen von Steuerdaten zwischen einem Kommunikationsgerät und einem weiteren Kommunikationsgerät unter Verwendung eines Kommunikationsprotokolls, das Verfahren zum Definieren eines Kommunikationsprotokolls, das Kommunikationsprotokoll und das weitere Kommunikationsgerät.

Insbesondere können das Kommunikationsgerät und/oder das weitere Kommunikationsgerät eingerichtet sein, eines der oben beschriebenen Verfahren auszuführen. Insbesondere können das Kommunikationsgerät und/oder das weitere Kommunikationsgerät entsprechende Einheiten aufweisen, die einen oder mehrere Schritte der obigen Verfahren ausführen können. Insbesondere können die Einheiten als Luft-Schnittstellen und/oder als Prozessor ausgebildet sein.

Im Folgenden werden exemplarische Ausführungsbeispiele der vorliegenden Erfindung mit Verweis auf die folgenden Figuren detailliert beschrieben.

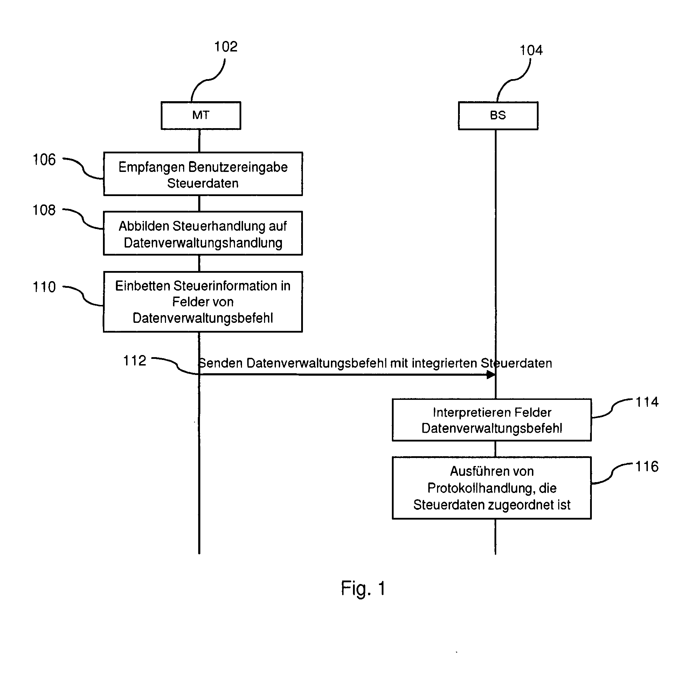

Figur 1 ist ein Flussdiagramm, das ein Verfahren zum Austauschen von Steuerdaten zwischen einem Kommunikationsgerät und einem weiteren Kommunikationsgerät unter Verwendung eines Kommunikationsprotokolls gemäß einem exemplarischen Ausführungsbeispiel der Erfindung veranschaulicht.

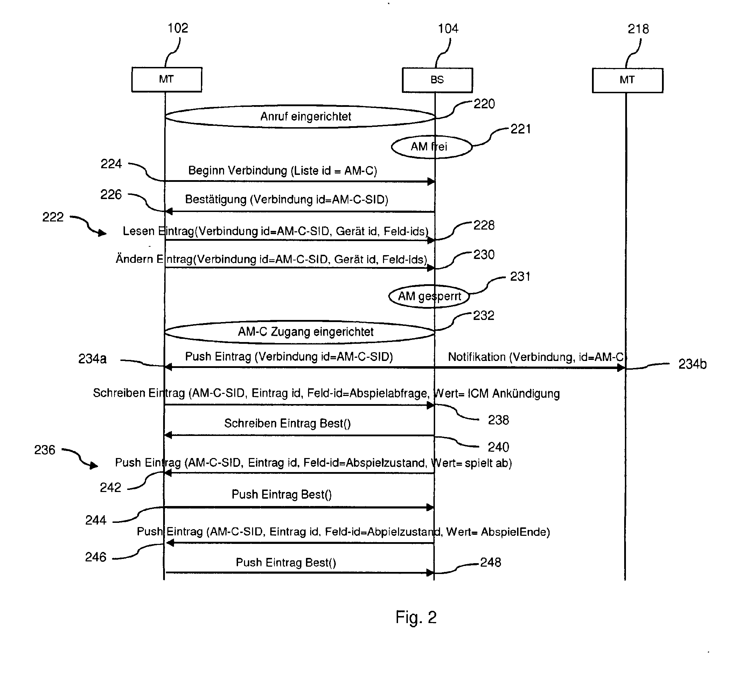

Figur 2 ist ein Flussdiagramm, das ein Verfahren zum Austauchen von Steuerdaten zwischen einem Kommunikationsgerät, einem weiteren Kommunikationsgerät und einem noch weiteren Kommunikationsgerät unter Verwendung eines Kommunikationsprotokolls gemäß einem weiteren exemplarischen Ausführungsbeispiel der Erfindung veranschaulicht.

Die Darstellungen in den Figuren sind schematisch und nicht maßstabsgetreu. Gleiche oder ähnliche Komponenten oder Verfahrensschritte in unterschiedlichen Figuren sind mit gleichen Bezugsziffern versehen oder mit Bezugsziffern, deren erste Zahl sich unterscheidet.

Figur 1 zeigt ein Kommunikationssystem 100, das ein Kommunikationsgerät 102 in Form eines Mobilteils und ein weiteres Kommunikationsgerät 104 in Form einer Basisstation aufweist. Das Mobilteil 102 und die Basisstation 104 bilden eine Telefonanlage und sind gemäß DECT und CAT-iq ausgebildet.

Im Folgenden wird ein Verfahren zum Austauschen von Steuerdaten zwischen dem Mobilteil 102 und der Basisstation 104 unter Verwendung eines Kommunikationsprotokolls gemäß einem exemplarischen Ausführungsbeispiel der Erfindung beschrieben. Das Verfahren wird durch das Mobilteil 102 ausgeführt, um eine Funktionalität der Basisstation 104 anzusprechen und eine entsprechende Protokollhandlung der Basisstation 104 auszulösen. Bei dem in Fig. 1 gezeigten Verfahren wird eine Anrufbeantworterinstanz in der Basisstation 104 erzeugt, die dem Mobilteil 102 zugeordnet ist. Die Protokollhandlung kann beispielsweise ausgeführt werden, wenn das Mobilteil 102 erstmalig bei der Basisstation 104 angemeldet wird und die Basisstation 102 dem Mobilteil 102 eine eigene Durchwahlnummer und einen eigenen Anrufbeantworter von der Basisstation 104 zuordnet.

Das der Telefonanlage zugrunde liegende Kommunikationsprotokoll wird von dem Mobilteil 102 und der Basisstation 104 unterstützt und zum Austauschen von Daten zwischen dem Mobilteil 102 und der Basisstation 104 verwendet. Ferner können das Mobilteil 102 und die Basisstation 104 Protokollhandlungen ausführen, die durch das Kommunikationsprotokoll definiert sind. Solche Protokollhandlungen betreffen Datenverwaltungshandlungen und Steuerhandlungen.

Das Kommunikationsprotokoll ist derart definiert, dass die Datenverwaltungshandlungen entsprechenden Datenverwaltungsbefehlen und/oder Datenverwaltungsinformation zugeordnet sind und eine listenbasierte Datenverwaltungsstruktur vorgeben ist, mittels der Daten zwischen den Kommunikationsgeräten 102, 104 ausgetauscht werden können. Die im Kommunikationsprotokoll spezifizierte Datenverwaltungsstruktur ist identisch in dem Mobilteil 102 und der Basisstation 104 implementiert, so dass mittels der Datenverwaltungsstruktur des Kommunikationsprotokolls Daten in den Kommunikationsgeräten 102, 104 verwaltet und in einem entsprechenden Datenspeicher des Mobilteils 102 und der Basisstation 104 gespeichert werden können. Das Mobilteil 102 und/oder die Basisstation 104 können alternativ eine Datenverwaltungsstruktur des Datenspeichers aufweisen, die verschieden von der Datenverwaltungsstruktur des Kommunikationsprotokolls ist. In diesem Fall können das Mobilteil 102 und/oder die Basisstation 104 dazu eingerichtet sein, die Datenverwaltungsstruktur des Kommunikationsprotokolls beim Senden und Empfangen von Daten zu verstehen, und insbesondere die jeweils eigene Datenverwaltungsstruktur in die Datenverwaltungsstruktur des Kommunikationsprotokolls zum Senden von Daten umzusetzen beziehungsweise die Datenverwaltungsstruktur des Kommunikationsprotokolls in die jeweils eigene Datenverwaltungsstruktur beim Empfangen von Daten umzusetzen.

Um eine gewünschte Steuerhandlung eines Kommunikationsgeräts auszuführen, stellt das Kommunikationsprotokoll Steuerhandlungen bereit, die Steuerdaten zugeordnet sind. Die Steuerdaten können ebenfalls einen Steuerbefehl und/oder Steuerinformation aufweisen und dienen zum Ansteuern eines Kommunikationsgeräts. Die Steuerdaten können in die Datenverwaltungsstruktur integriert werden, indem eine Parametrisierung der auszutauschen Datenverwaltungsbefehlen und/oder Datenverwaltungsinformation die Steuerdaten anstatt beliebige Daten und/oder eine Listenidentifikation einer Liste aufweist, die angesprochen werden soll und die der Steuerhandlung zugeordnet ist.

Die Datenverwaltungsstruktur in dem Mobilteil 102 und der Basisstation 104 ist listenbasiert ausgebildet, so dass das Mobilteil 102 und die Basisstation 104 Listen aufweist, in deren Felder die zu verwaltenden Daten integriert sind. Ferner erfolgt die Verwaltung der Listen des Mobilteils 102 und der Basisstation 104 über das Ansprechen der Felder der Listen. Ein Datenverwaltungsbefehl ist ebenfalls als Liste ausgebildet, die ein erstes Feld für eine Identifikation der anzusprechenden Liste und weitere Felder für die übertragenen Daten aufweist.

Bei dem in Fig. 1 gezeigten Verfahren bestehen die zu übermittelnden Steuerdaten aus einer Steuerinformation, nämlich einer Identifikation einer Anrufbeantworterliste in der Basisstation 104. Die angesprochene Steuerhandlung der Basisstation 104 ist das Erzeugen der Anrufbeantworterinstanz in der Basisstation 104 für das Mobilteil 102.

In einem ersten Schritt 106 des Verfahrens empfängt das Mobilteil 102 über eine Benutzereingabe des Mobilteils 102 Information über die Steuerhandlung, die die Basisstation 104 ausführen soll. Das Mobilteil 102 setzt diese Information in die auszuführende Steuerhandlung um, die in einem weiteren Schritt 108 auf eine zugeordnete Datenverwaltungshandlung unter Verwendung einer protokolldefinierten Abbildungsvorschrift abgebildet wird. Die Datenverwaltungshandlung, auf die die Steuerhandlung abgebildet wird, entspricht einem Einfügen von Daten in der Basisstation 104. Dann erzeugt das Mobilteil 102 die zu übermittelnden Steuerdaten, hier die Steuerinformation, und ordnet der Steuerinformation einen Datenverwaltungsbefehl unter Verwendung der Abbildungsvorschrift zu. In einem Schritt 110 implementiert das Mobilteil 102 die Steuerdaten in entsprechende Felder des Datenverwaltungsbefehls, indem das erste Feld der zu übertragenden Liste die Identifikation der Anrufbeantworterliste der Basisstation 104 aufweist. Die weiteren Listenfelder der zu übermittelenden Liste werden mit Default-Werten belegt. Danach sendet das Mobilteil 102 den Datenverwaltungsbefehl in einem Schritt 112 an die Basisstation 104.

Nachdem die Basisstation 104 die Steuerdaten, die in dem Datenverwaltungsbefehl eingebettet sind, in dem Schritt 112 empfangen hat, interpretiert die Basisstation 104 in einem Schritt 114 den empfangenen Datenverwaltungsbefehl, um in einem Schritt 116 die den Steuerdaten zugeordnete Protokollhandlung auszuführen, die durch die übermittelte Steuerinformation initiiert wird. Dazu liest die Basisstation 104 die Felder des Datenverwaltungsbefehls aus und erkennt basierend auf der übermittelten Listenidentifikation der Anrufbeantworterliste, dass eine Steuerhandlung ausgeführt werden soll. Die Basisstation 104 ordnet unter Verwendung der Abbildungsvorschrift den übermittelten Datenverwaltungsbefehl der Steuerhandlung zu und führt die Steuerhandlung entsprechend aus.

Bezugnehmend auf Figur 2 wird ein Verfahren zum Austauschen von Steuerdaten zwischen dem Mobilteil 102, der Basisstation 104 und einem weiteren Mobilteil 218 unter Verwendung des in Fig. 1 beschriebenen Kommunikationsprotokolls gemäß einem weiteren exemplarischen Ausführungsbeispiel der Erfindung beschrieben.

Bei diesem Ausführungsbeispiel wird zunächst ein Anrufbeantworter, der eine logische Instanz in der Basisstation 104 bildet, durch das Mobilteil 102 allokiert. Im Anschluss daran wird der Anrufbeantworter der Basisstation 104 durch das Mobilteil 102 angesprochen, um einen in der Basisstation 102 gespeicherten Nachrichtentext abzuspielen.

In einem ersten Schritt 220 des Verfahrens wird ein Anruf zwischen dem Mobilteil 102 und der Basisstation 104 eingerichtet. In diesem Zustand ist der Anrufbeantworter AM der Basisstation 104 nicht allokiert, sondern frei. Dieser Zustand ist mit einem Bezugszeichen 221 bezeichnet.

Danach wird das Allokieren des Anrufbeantworters durch das Mobilteil 102 ausgeführt. Dieser Vorgang ist mit dem Bezugszeichen 222 bezeichnet.

In einem Schritt 224 richtet das Mobilteil 102 mittels eines Befehls "Beginn Verbindung (Liste id = AM-C)" einen Zugang zu dem Anrufbeantworter AM der Basisstation 104 ein, indem das Mobilteil 102 eine Liste, die dem Anrufbeantworter AM zugeordnet ist, über die Identifikation "id = AM-C" anspricht. In einem weiteren Schritt 226 bestätigt die Basisstation 104 dem Mobilteil 102 die eingerichtete Verbindung zu dem Anrufbeantworter AM und teilt gleichzeitig die Identifikation "id=AM-C-SID" der eingerichteten Verbindung zu dem Anrufbeantworter AM der Basisstation 104 mit. In einem weiteren Schritt 228 sendet das Mobilteil 102 einen Lesebefehl an die Basisstation 104, um Daten, die für das Allokieren des Anrufbeantworters AM erforderlich sind, aus einer Liste der Basisstation 104 zu lesen. Diese Daten betreffen die Geräteidentifikation ("Geräte-id") des Kommunikationsgeräts, für den der Anrufbeantworter AM gegenwärtig allokiert ist. Ferner kann Information ("Feld-ids") über Funktionalitäten der Anrufbeantworters AM gelesen werden, die beispielsweise das Abspielen von gespeicherten Nachrichtentexten und/oder das Aufnehmen von Nachrichtentexten betreffen. Da der Anrufbeantworter AM der Basisstation 104 nicht allokiert ist, enthält das gelesene Feld mit der Geräteidentifikation der Liste des Anrufbeantworters AM der Basisstation 104 ein Nullinformation. In einem weiteren Schritt 230 sendet das Mobilteil 102 einen Dateneintrag-Änderungsbefehl an die Basisstation 104, um das Feld der Liste des Anrufbeantworters AM der Basisstation 104, das die Geräteidentifikation eines allokierenden Kommunikationsgeräts enthält, mit der Geräteidentifikation des Mobilteils 102 zu belegen. Dadurch befindet sich der Anrufbeantworter AM der Basisstation 104 in einem allokierten Zustand, so dass der Anrufbeantworter AM der Basisstation 104 für einen Zugriff durch das weitere Mobilteil 218 gesperrt ist. Dieser allokierte Zustand ist mit dem Bezugszeichen 231 bezeichnet. Danach wird der Zugang des Mobilteils 102 zu dem Anrufbeantworter AM eingerichtet. Dieser Vorgang ist mit dem Bezugszeichen 232 bezeichnet.

Die Schritte 224-232 können mittels eines einzelnen Datenverwaltungsbefehls "Allokieren von Daten" erreicht werden, bei dem entsprechende Felder des Datenverwaltungsbefehls durch die Feldinformationen der Lese- und Schreib-Datenverwaltungsbefehle belegt sind.

Folglich beruht das Allokieren 222 des Anrufbeantworters AM auf dem Austauschen von Datenverwaltungsbefehlen, die von der Basisstation 104 an Hand der Listenfeldidentifikation des Feldes der angesprochenen Liste protokollbedingt erkannt und interpretiert werden, um die diesen Datenverwaltungsbefehlen zugeordnete Steuerhandlung auszuführen.

Danach sendet die Basisstation 104 in einem Schritt 234a, b Notifikationsinformation an die Mobilteile 102, 218, die den allokierten Betriebszustand des Anrufbeantworters AM der Basisstation 104 angibt. Zu diesem Zweck wird die Verbindungsidentifikation "id=AM-C-SID" der eingerichteten Verbindung zwischen dem Mobilteil 102 und dem Anrufbeantworter AM der Basisstation 104 mittels eines Push-Befehls mitgeteilt. Das Mobilteil 218 empfängt lediglich eine Notifikation, das die Basisstation 104 mit einem weiteren Gesprächspartner in einer Transaktion steht, indem die Identifikation des Anrufbeantworters AM-C übermittelt wird. Folglich wird für die Notifikation des Mobilteils 102, 218 eine Steuerhandlungsnotifikation über einen Gerätezustand auf eine Datenverwaltungshandlungsnotifikation über einen Datenzustand abgebildet, und es wird eine auszutauschende Datenverwaltungsinformation verwendet, in dem die zu übermittelnde Steuerinformation implementiert wird. Es wird angemerkt, dass eine spontane Notifikation von einem Kommunikationsgerät an ein weiteres Kommunikationsgerät mittels eines Push-Befehls übermittelt wird, wenn beide Kommunikationsgeräte in einer Transaktion stehen und auf Daten des jeweils anderen zugreifen können, während eine spontane Notifikation von einem Kommunikationsgerät an ein weiteres Kommunikationsgerät mittels einer Notifikation-Information übermittelt wird, wenn beide Kommunikationsgeräte nicht in einer Transaktion miteinander stehen.

Im Weiteren wird das Steuern einer Abspielfunktion des Anrufbeantworters AM der Basisstation 104 beschrieben, das mit dem Bezugszeichen 236 bezeichnet ist. In einem Schritt 238 sendet das Mobilteil 102 einen Schreibbefehl an die Basisstation 104, der die Identifikation der eingerichteten Verbindung mit dem Anrufbeantworter AM, die dem Anrufbeantworter AM zugehörige Identifikation (Eintrag id), eine Abspielanfrage und einen entsprechenden Wert für den angefragten abzuspielenden Text aufweist. In einem Schritt 240 bestätigt die Basisstation 104 dem Mobilteil 102 den erhaltenen Schreibbefehl. In einem Schritt 242 informiert die Basisstation 104 das Mobilteil 102 spontan mittels eines Push-Datenverwaltungsbefehls, dass der angefragte Text abgespielt wird. Der Push-Befehl weist dazu ein Feld, das mit einer Identifikation für den Abspielzustand belegt ist, und ein weiteres Feld auf, das die Information enthält, dass der Nachrichtentext gerade abgespielt wird. In einem Schritt 244 bestätigt das Mobilteil 102 der Basisstation 104 den erhaltenen Push-Befehl.

In einem Schritt 246 sendet die Basisstation 104 spontan eine Notifikation an das Mobilteil 102, dass das Abspielen der Nachricht beendet ist, indem die Basisstation 104 einen Push-Datenverwaltungsbefehl an das Mobilteil 102 mit den entsprechenden Feldinformationen an das Mobilteil 102 sendet. In einem Schritt 248 quittiert das Mobilteil 102 der Basisstation 104 den erhaltenen Push-Befehl.

Das Abspielen 236 des Nachrichtentexts wird folglich mittels Steuerdaten ausgeführt, die einen Steuerbefehl ("Abspielanfrage", "Abspielzustand") und zusätzliche Steuerinformation ("ICM Ankündigung", "spielt ab", "AbspielEnde") aufweist. Die Steuerbefehle und die Steuerinformation werden in Felder der Datenverwaltungsbefehle ("Schreiben", "Push") implementiert, die an das jeweils andere Kommunikationsgerät 102, 104 übermittelt werden.

Es wird angemerkt, dass insbesondere in einer weiteren Ausführungsform die oben beschriebenen Verfahren, das Protokoll und das Kommunikationsgerät die Datenverwaltungshandlung(en) auf die Steuerhandlung(en) abbilden und Daten unter Verwendung einer Datenverwaltungsstruktur oder einer Steuerdatenstruktur austauschen können. Die oben im Zusammenhang mit dem Abbilden der Steuerhandlung(en) auf die Datenverwaltungshandlung(en) und dem Austauschen der Steuerdaten unter Verwendung der Datenverwaltungsstruktur beschriebenen Maßnahmen, technischen Effekte und Vorteile können sinngemäß für die zuletzt genannte Ausführungsform gelten. Diese Ausführungsform kann insbesondere dann vorteilhaft sein, wenn das Kommunikationsprotokoll keine Datenverwaltungsstruktur, sondern nur eine Steuerdatenstruktur definieren kann, mittels der Datenverwaltungshandlungen in einem Kommunikationsgerät initiiert werden sollen.

Ergänzend ist darauf hinzuweisen, dass "aufweisend" keine anderen Elemente oder Schritte ausschließt und die Verwendung des Artikels "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kommunikationsprotokoll zum Austauschen von Steuerdaten zwischen Kommunikationsgeräten (102, 104, 218) nach einem "Digital Enhanced Cordless Telecommunications"(DECT)-Standard, wobei das Kommunikationsprotokoll aufweist:
- eine Anweisung zum Abbilden von Steuerhandlungen eines Kommunikationsprotokolls auf Datenverwaltungshandlungen des Kommunikationsprotokolls, und
- eine Anweisung zum Verwenden einer Datenverwaltungsstruktur des Kommunikationsprotokolls für das Austauschen der Steuerdaten zwischen den Kommunikationsgeräten (102, 104,218).

2. Verfahren zum Austauschen von Steuerdaten zwischen einem Kommunikationsgerät (102, 104, 218) und einem weiteren Kommunikationsgerät (102, 104, 218) unter Verwendung eines Kommunikationsprotokolls, wobei das Verfahren aufweist:
- Abbilden (108) einer Steuerhandlung auf eine Datenverwaltungshandlung des Kommunikationsprotokolls,
- Verwenden (110) einer Datenverwaltungsstruktur des Kommunikationsprotokolls für das Austauschen der Steuerdaten, und
- Austauschen (112) der Steuerdaten zwischen dem Kommunikationsgerät (102, 104, 218) und dem weiteren Kommunikationsgerät (102, 104, 218),
wobei das Kommunikationsgerät (102, 104, 218) und/oder das weitere Kommunikationsgerät (102, 104, 218) nach einem "Digital Enhanced Cordless Telecommunications"(DECT)-Standard ausgebildet sind.

3. Verfahren nach Anspruch 2, wobei eine Steuerhandlung auf eine Datenverwaltungshandlung abgebildet wird.

4. Verfahren nach Anspruch 2 oder 3, wobei das Abbilden der Steuerhandlungen auf die Datenverwaltungshandlungen Kommunikationsgerät-abhängig erfolgt.

5. Verfahren nach einem der Ansprüche 2 bis 4, wobei die Steuerhandlungen zumindest eins aus Abfragen eines Zustands eines Kommunikationsgeräts, Allokieren eines Kommunikationsgeräts, Freigeben eines Kommunikationsgeräts, Steuern einer Funktion eines Kommunikationsgeräts, Erzeugen einer Instanz in einem Kommunikationsgerät und Austauschen einer Notifikation über einen Zustand eines Kommunikationsgeräts aufweisen.

6. Verfahren nach einem der Ansprüche 2 bis 5, wobei die Datenverwaltungshandlungen zumindest eins aus Lesen von Daten, Allokieren von Daten, Freigeben von Daten, Schreiben von Daten, Einfügen von Daten und Austauschen einer Notifikation über eine Änderung von Daten aufweisen.

7. Verfahren nach einem der Ansprüche 2 bis 6, wobei die Datenverwaltungsstruktur zumindest eins aus listenbasiert, Binärbaum-basiert und Datenbaum-basiert ausgebildet ist.

8. Verfahren nach einem der Ansprüche 2 bis 7, wobei die Steuerdaten in auszutauschende Daten integriert werden.

9. Verfahren nach einem der Ansprüche 2 bis 8, wobei die Datenverwaltungsstruktur durch das Kommunikationsgerät (102, 104, 218) definiert wird.

10. Verfahren nach einem der Ansprüche 2 bis 9, wobei das Kommunikationsgerät (102, 104, 218) und/oder das weitere Kommunikationsgerät (102, 104, 218) als Schnurlostelefon, als kabelgebundene Basisstation für das Schnurlostelefon oder als Anrufbeantworter der Basisstation ausgebildet sind.

11. Verfahren nach einem der Ansprüche 2 bis 10, wobei das Kommunikationsgerät (102, 104, 218) und/oder das weitere Kommunikationsgerät (102, 104, 218) nach dem "Cordless Advanced Technology Internet and Quality" (CAT-iq)-Standard ausgebildet sind.

12. Kommunikationsgerät (102, 104, 218) nach einem "Digital Enhanced Cordless Telecommunications" (DECT)-Standard zum Austauschen von Steuerdaten mit einem weiteren Kommunikationsgerät (102, 104, 218) unter Verwendung eines Kommunikationsprotokolls, wobei das Kommunikationsgerät (102, 104, 218) aufweist:
- eine Einheit zum Abbilden einer Steuerhandlung auf eine Datenverwaltungshandlung des Kommunikationsprotokolls,
- eine Einheit zum Verwenden einer Datenverwaltungsstruktur des Kommunikationsprotokolls für das Austauschen der Steuerdaten, und
- eine Einheit zum Austauschen der Steuerdaten mit dem weiteren Kommunikationsgerät (102, 104, 218).

## Claims

1. A communication protocol for exchanging control data between communication devices (102, 104, 218) in accordance with a Digital Enhanced Cordless Telecommunications (DECT) standard, wherein the communication protocol comprises:
- an instruction for imaging control actions of a communication protocol on data management actions of the communication protocol, and
- an instruction for using a data management structure of the communication protocol for the exchange of the control data between the communication devices (102, 104, 218).

2. A method for exchanging control data between a communication device (102, 104, 218) and a further communication device (102, 104, 218) with use of a communication protocol, wherein the method comprises the following steps:
- imaging (108) a control action on a data management action of the communication protocol,
- using (110) a data management structure of the communication protocol for the exchange of the control data, and
- exchanging (112) the control data between the communication device (102, 104, 218) and the further communication device (102, 104, 218),
wherein the communication device (102, 104, 218) and/or the further communication device (102, 104, 218) is/are formed in accordance with a Digital Enhanced Cordless Telecommunications (DECT) standard.

3. The method according to Claim 2, wherein a control action is imaged on a data management action.

4. The method according to Claim 2 or 3, wherein the control actions are imaged on the data management action in a manner dependent on the communication device.

5. The method according to one of Claims 2 to 4, wherein the control actions comprise at least one of interrogating a state of a communication device, allocating a communication device, releasing a communication device, controlling a function of a communication device, generating an authority in a communication device, and exchanging a notification concerning a state of a communication device.

6. The method according to one of Claims 2 to 5, wherein the data management actions comprise at least one of reading data, allocating data, releasing data, writing data, adding data, and exchanging a notification concerning a change of data.

7. The method according to one of Claims 2 to 6, wherein the data management structure is formed in a manner selected from at least one of list-based, binary-tree-based, and data-tree-based.

8. The method according to one of Claims 2 to 7, wherein the control data are integrated in data to be exchanged.

9. The method according to one of Claims 2 to 8, wherein the data management structure is defined by the communication device (102, 104, 218).

10. The method according to one of Claims 2 to 9, wherein the communication device (102, 104, 218) and/or the further communication device (102, 104, 218) is/are formed as a cordless telephone, as a wired base station for the cordless telephone, or as an answering machine of the base station.

11. The method according to one of Claims 2 to 10, wherein the communication device (102, 104, 218) and/or the further communication device (102, 104, 218) is/are formed in accordance with the Cordless Advanced Technology Internet and Quality (CAT-iq) standard.

12. A communication device (102, 104, 218) according to a Digital Enhanced Cordless Telecommunications (DECT) standard for exchanging control data with a further communication device (102, 104, 218) with use of a communication protocol, wherein the communication device (102, 104, 218) comprises:
- a unit for imaging a control action on a data management action of the communication protocol,
- a unit for using a data management structure of the communication protocol for the exchange of the control data, and
- a unit for exchanging the control data with the further communication device (102, 104, 218).

## Revendications

1. Protocole de communication pour l'échange de données de commande entre des appareils de communication (102, 104, 218) selon une norme de « Télécommunications numériques améliorées sans cordon » (DECT), le protocole de communication comportant :
- une instruction pour la représentation d'actions de commande d'un protocole de communication sur des actions de gestion de données du protocole de communication, et
- une instruction pour l'utilisation d'une structure de gestion de données du protocole de communication pour l'échange des données de commande entre les appareils de communication (102, 104, 218).

2. Protocole pour l'échange de données de commande entre un appareil de communication (102, 104, 218) et un autre appareil de communication (102, 104, 218) à l'aide du protocole de communication, le procédé comportant :
- la représentation (108) d'une action de commande visant une action de gestion de données du protocole de communication,
- l'utilisation (110) d'une structure de gestion de données du protocole de communication pour l'échange de données de commande, et
- l'échange (112) des données de commande entre l'appareil de communication (102, 104, 218) et l'autre appareil de communication (102, 104, 218),
dans lequel l'appareil de communication (102, 104, 218) et/ou l'autre appareil de communication (102, 104, 218) est/sont conçu(s) selon une norme de « Télécommunications numériques améliorées sans cordon » (DECT).

3. Procédé selon la revendication 2, dans lequel une action de commande est représentée sur une action de gestion de données.

4. Procédé selon la revendication 2 ou 3, dans lequel la représentation des actions de commande sur les actions de gestion de données est réalisée en fonction de l'appareil de communication.

5. Procédé selon l'une des revendications 2 à 4, dans lequel les actions de commande comprennent au moins un élément parmi la détection d'un état d'un appareil de communication, l'allocation d'un appareil de communication, le déblocage d'un appareil de communication, la commande d'une fonction d'un appareil de communication, la production d'une instance dans un appareil de communication et l'échange d'une notification concernant un état d'un appareil de communication.

6. Procédé selon l'une des revendications 2 à 5, dans lequel les actions de gestion de données comprennent au moins un élément parmi la lecture de données, l'allocation de données, le déblocage de données, l'écriture de données, l'insertion de données et l'échange d'une notification concernant un changement de données.

7. Procédé selon l'une des revendications 2 à 6, dans lequel la structure de gestion de données est conçue au moins sur une base parmi une liste, un arbre binaire et un arbre de données.

8. Procédé selon l'une des revendications 2 à 7, dans lequel les données de commande sont intégrées dans des données à échanger.

9. Procédé selon l'une des revendications 2 à 8, dans lequel la structure de gestion de données est définie par l'appareil de communication (102, 104, 218).

10. Procédé selon l'une des revendications 2 à 9, dans lequel l'appareil de communication (102, 104, 218) et/ou l'autre appareil de communication (102, 104, 218) est/sont conçu(s) comme un téléphone sans fil, comme une station de base reliée par câble pour le téléphone sans fil ou comme un répondeur de la station de base.

11. Procédé selon l'une des revendications 2 à 10, dans lequel l'appareil de communication (102, 104, 218) et/ou l'autre appareil de communication (102, 104, 218) est/sont conçu(s) selon la norme de « Technologie sans fil avancée - Internet et qualité » (CAT-iq).

12. Appareil de communication (102, 104, 218) selon une norme de « Télécommunications numériques améliorées sans cordon » (DECT) pour l'échange de données de commande avec un autre appareil de communication (102, 104, 218) à l'aide d'un protocole de communication, l'appareil de communication (102, 104, 218) comportant :
- une unité pour la représentation d'une action de commande sur une action de gestion de données du protocole de communication,
- une unité pour l'utilisation d'une structure de gestion de données du protocole de communication pour l'échange des données de commande, et
- une unité pour l'échange de données de commande avec l'autre appareil de communication (102, 104, 218).
